# EUROPEAN PATENT SPECIFICATION

(11) **EP 3 368 628 B1**
(45) Date of publication and mention of the grant of the patent: **26.01.2022**
(21) Application number: 15906886.5
(22) Date of filing: 26.10.2015
(51) Int. Cl.: C09J 175/08, C09J 175/04, C09J 163/00, C08K 5/17, B32B 37/12

(54) **POLYURETHANE ADHESIVE COMPOSITION**
POLYURETHANKLEBSTOFFZUSAMMENSETZUNG
COMPOSITION ADHÉSIVE DE POLYURÉTHANE

(43) Date of publication of application: 05.09.2018
(73) Proprietor: Dow Global Technologies LLC, Midland, MI 48674 (US); Rohm and Haas Company, Philadelphia, PA 19106 (US)
(72) Inventor: BAI, Chenyan, Shanghai 201203 (CN); QU, Zhaohui, Shanghai 201203 (CN); BHATTACHARJEE, Debkumar, Blue Bell, PA 19422 (US)
(74) Representative: Boult Wade Tennant LLP
(86) International application number: PCT/CN2015/092829
(87) International publication number: WO 2017/070820

(56) References cited:
- CN-A- 1 093 377
- CN-A- 102 816 540
- JP-A- H0 762 320
- JP-A- H11 335 651
- US-A1- 2007 148 445
- US-A1- 2007 148 445

## Description

### FIELD OF THE INVENTION

The present invention relates to an adhesive composition and a method of using it in making laminates. In particular, it relates to a polyurethane adhesive composition with good bond strength, heat seal strength and boil in bag resistance. The polyurethane adhesive composition is especially suitable for bonding polyethylene and metal.

### INTRODUCTION

In general, the function of an adhesive composition is to bond together substrates selected from polyethylene (PE), polypropylene, polyester, polyamide, metal, paper or cellophane to form composite films, i.e., laminates for different purposes. Different substrates and application purposes have different preferences and requirements to the adhesive applied onto them. To bond polyethylene substrate with metal substrate, for example, the adhesive is required to perform especially well in Bond Strength (BS), Heat Seal Strength (HS) and Boil in Bag Resistance (BBR).

Laminates made thereof are usually used in the packaging industry, especially in making food packaging. Due to environmental, health and safety reasons, it is preferred that the adhesives are aqueous or solvent free.

It is therefore desired to provide a polyurethane adhesive composition with good performances in BS, HS and BBR, therefore, is especially suitable for bonding PE and metal.

### SUMMARY OF THE INVENTION

The present invention provides an adhesive composition comprising, by dry weight based on total dry weight of the adhesive composition, from 70% to 96%, a polyurethane dispersion, from 1% to 20%, an epoxy resin, and from 0.5% to 15%, an aliphatic amine crosslinker; wherein the polyurethane dispersion comprises a polyurethane prepolymer, and by dry weight based on total dry weight of the polyurethane dispersion, from 0.5% to 10%, an ionic surfactant, and from 0.1% to 8%, a polyamine.

The present invention further provides a laminate comprising the adhesive composition.

### DETAILED DESCRIPTION OF THE INVENTION

The adhesive composition of the present invention comprises, by dry weight based on total dry weight of the adhesive composition, from 70% to 96%, preferably from 75% to 93%, and more preferably from 80% to 90%, a polyurethane dispersion, from 1% to 20%, preferably from 2% to 15%, and more preferably from 3% to 13%, an epoxy resin, and from 0.5% to 15%, preferably from 0.7% to 12%, and more preferably from 1.0% to 10%, an aliphatic amine crosslinker.

The adhesive composition is aqueous, and is preferably solvent free, that is, the adhesive composition comprises less than 4%, preferably less than 2%, and more preferably less than 1%, by dry weight based on total dry weight of the adhesive composition, an organic solvent.

The organic solvent is a compound that is a liquid at 25°C, and has a boiling point of below 300°C.

### The polyurethane dispersion

The polyurethane dispersion is prepared by dispersing a polyurethane prepolymer into water with the assistance of an ionic surfactant.

The polyurethane prepolymer comprises, as polymerized units, by dry weight based on total dry weight of the polyurethane prepolymer, from 10% to 40%, preferably from 12% to 38%, and more preferably from 15% to 35%, a monomeric aromatic diisocyanate, and from 20% to 85%, preferably from 25% to 80%, and more preferably from 30% to 75%, a polyether polyol.

Optionally, the polyurethane prepolymer further comprises, as polymerized units, from 0.1% to 30%, preferably from 18% to 28%, and more preferably from 20% to 25% by dry weight based on total dry weight of the polyurethane prepolymer, a polyester polyol.

The monomeric aromatic diisocyanates preferably have a molecular weight Mw of less than 500g/mol, preferably less than 300g/mol, and more preferably less than 275g/mol.

The preferred monomeric aromatic diisocyanates are selected from methylene diphenyl diisocyanate (MDI), toluene diisocyanate (TDI), and the combination thereof. TDI can be generally used with any commonly available isomer distributions. The most commonly available TDI has an isomer distribution of 80% 2,4-isomer and 20% 2,6-isomer. TDI with other isomer distributions can also be used. When MDI is used in the preparation of the polyurethane prepolymer, it is preferably pure 4,4'-MDI or any combinations of MDI isomers. More preferably, it is pure 4,4'-MDI, and any combinations of 4,4'-MDI with other MDI isomers. When the combinations of 4,4'-MDI with other MDI isomers are used, the preferred concentration of 4,4'-MDI is from 25% to 75% of all MDI isomers.

The polyether polyol and the polyester polyol each has a molecular weight Mw of from 400 to 4000g/mol, preferably from 750 to 3500g/mol, and more preferably from 800 to 3000g/mol. The polyether polyol and the polyester polyol each has a functionality of from 1.8 to 4, preferably from 1.9 to 3, and more preferably from 2 to 2.5.

Polyether polyols are the addition polymerization products and the graft products of ethylene oxide, propylene oxide, tetrahydrofuran, and butylene oxide, the condensation products of polyhydric alcohols, and any combinations thereof. Suitable examples of the polyether polyols include polypropylene glycol (PPG), polyethylene glycol (PEG), polybutylene glycol, polytetramethylene ether glycol (PTMEG), and any combinations thereof. Preferably, the polyether polyols are the combinations of PEG and at least one another polyether polyol selected from the above described addition polymerization and graft products, and the condensation products. More preferably, the polyether polyols are the combinations of PEG and at least one of PPG, polybutylene glycol, and PTMEG.

The polyester polyols are the condensation products or their derivatives of diols, and dicarboxylic acids and their derivatives.

Suitable examples of the diols are ethylene glycol, butylene glycol, diethylene glycol, triethylene glycol, polyalkylene glycols such as polyethylene glycol, 1,2-propanediol, 1,3-propanediol, 2-methyl-1,3-propandiol, 1,3-butanediol, 1,4-butanediol, 1,6-hexanediol, neopentyl glycol, 3-methyl-1,5-pentandiol, and any combinations thereof. In order to achieve a polyol functionality of greater than 2, triols and/or tetraols may also be used. Suitable examples of such triols include trimethylolpropane and glycerol. Suitable examples of such tetraols include erythritol and pentaerythritol.

Dicarboxylic acids are selected from aromatic acids, aliphatic acids, and the combination thereof. Suitable examples of the aromatic acids are phthalic acid, isophthalic acid, and terephthalic acid; while suitable examples of the aliphatic acids are adipic acid, azelaic acid, sebacic acid, glutaric acid, tetrachlorophthalic acid, maleic acid, fumaric acid, itaconic acid, malonic acid, suberic acid, 2-methyl succinic acid, 3,3-diethyl glutaric acid, and 2,2-dimethyl succinic acid. Anhydrides of these acids can likewise be used. For the purposes of the present invention, the anhydrides are accordingly encompassed by the expression of term "acid". Preferably, the aliphatic acids and aromatic acids are saturated, and are respectively adipic acid and isophthalic acid. Monocarboxylic acids, such as benzoic acid and hexane carboxylic acid, should be minimized or excluded.

Polyester polyols can be also prepared by addition polymerization of lactone with diols, triols and/or tetraols. Suitable examples of lactone include caprolactone, butyrolactone and valerolactone. Suitable examples of the diols are ethylene glycol, butylene glycol, diethylene glycol, triethylene glycol, polyalkylene glycols such as polyethylene glycol, 1,2-propanediol, 1,3-propanediol, 2-methyl 1,3-propandiol, 1,3-butanediol, 1,4-butanediol, 1,6-hexanediol, neopentyl glycol, 3-methyl 1,5-pentandiol and any combinations thereof. Suitable examples of triols include trimethylolpropane and glycerol. Suitable examples of tetraols include erythritol and pentaerythritol.

The preparation of the polyurethane prepolymer is in any way well-known to those of ordinary skills in the art, and includes condensation polymerization. The polyurethane prepolymer is preferably an NCO group terminated prepolymer. Organic solvent is preferably not used in the preparation of the polyurethane prepolymer.

In the practice of preparing the polyurethane dispersion of the present invention, the ionic surfactant is preferably introduced into the polyurethane prepolymer prior to the addition of water, but it is not outside the scope of the present invention that the surfactant is charged into water prior to the addition of the polyurethane prepolymer.

The ionic surfactant is from 0.5% to 10%, preferably from 1% to 8%, and more preferably from 1.5% to 6% by dry weight based on total dry weight of the polyurethane dispersion.

The ionic surfactant is preferably anionic. Suitable examples of the anionic surfactants include sulfonates, phosphates, carboxylates, and any combinations thereof. Preferably, the anionic surfactant is sulfonate such as sodium dodecyl benzene sulfonate, sodium dodecyl sulfonate, sodium dodecyl diphenyl oxide disulfonate, sodium n-decyl diphenyl oxide disulfonate, isopropylamine dodecylbenzenesulfonate, and sodium hexyl diphenyl oxide disulfonate. More preferably, the anionic surfactant is sodium dodecyl benzene sulfonate.

From 0.1% to 8%, preferably from 0.2% to 6%, and more preferably from 0.5% to 5% by dry weight based on total dry weight of the polyurethane dispersion, a polyamine is then added after the addition of the ionic surfactant, and water for chain extension purpose.

Preferably, the polyamines are diamines, in which each amine group is a primary or a secondary amine. Suitable examples of the diamines include ethylene diamine, 1,2- and 1,3-diaminopropane, 1,4-diaminobutane, 1,6-diaminohexane, isophorone diamine, and any combinations thereof.

The polyurethane dispersion preferably has a solid content of from 25% to 60%, preferably from 30% to 55%, and more preferably from 35% to 50%.

### The epoxy resin

The epoxy resin is added into the polyurethane dispersion under stirring to form a stable mixture.

The epoxy resin is a compound having at least 2, preferably from 2 to 4, and more preferably 2 epoxide groups. The epoxy resin is obtainable by reacting compounds containing epoxide groups with diols or polyols. Suitable examples of compounds containing epoxide goups include those which are substituted by a halogen atom, a chlorine atom in particular, on a carbon atom adjacent to the epoxide group. Epichlorohydrin is a preferred compound containing epoxide groups. Reaction of these compounds with diols or polyols will form the epoxy resin having terminal epoxide group. Preferably, diols or polyols are aliphatic compounds. Polyols are preferred. Suitable examples of the polyols include polyglycols such as polyethylene glycol (PEG), polypropylene glycol (PPG), polybutylene glycol (PBG), polyglycol copolymers, and the combinations thereof. Preferably, the aliphatic polyols are polyethylene glycol (PEG), polypropylene glycol (PPG), their copolymers, and the combinations thereof. More preferably, the polyol is polypropylene glycol (PPG).

Particularly preferred epoxy resins are the reaction products of epichlorohydrin with PPG.

Suitable epoxy resins preferably have a number-average molar weight of between 200 to 1000g/mol, in particular between 300 to 800g/mol.

Suitable examples of the epoxy resins may be commercially available from D.E.R.^{™} 732 epoxy resin, D.E.R.^{™}734 epoxy resin, and D.E.R.^{™}736 epoxy resin of The Dow Chemical Company.

### The aliphatic amine crosslinker

The aliphatic amine crosslinker is added into the mixture of the polyurethane dispersion and the epoxy resin under stirring to prepare the adhesive composition of the present invention.

The aliphatic amine crosslinker is a compound having at least two reactive hydrogen groups which react with epoxide groups. The aliphatic amine crosslinker is preferably emulsifiable, dispersible, or soluble in water. In particular, the aliphatic amine crosslinker is soluble in water.

Suitable aliphatic amine crosslinkers are aliphatic amine containing primary or secondary, preferably both primary and secondary amino groups.

Suitable examples of the aliphatic amine crosslinker are diethylene triamine (DETA), triethylene pentamine (TEPA), triethylene tetramine (TETA), polyetheramine, and any combinations thereof.

### Other additives

The polyurethane dispersion may further comprise an adhesion promoter reactively binding onto the backbone of the polyurethane prepolymer. The adhesion promoter may also be added into the adhesive composition as a post additive. It is well-known in the art of the selection to a proper adhesion promoter, and it is used at an amount range of from 0.1% to 3%, preferably from 0.1% to 2%, and more preferably from 0.1% to 1% by dry weight based on total dry weight of the polyurethane prepolymer.

Any adhesion promoters can be used in the present invention, while a silane adhesion promoter is preferably used. Suitable examples of the silane adhesion promoters include amino silane such as aminopropyltriethoxysilane, epoxy silane such as 3-glycidoxypropyltriethoxysilane, and mercapto silane such as gamma-mercaptopropyltrimethoxysilane.

### The laminate made from the polyurethane adhesive composition

The adhesive composition is applied onto the surface of substrates including metal foils, polyester films, and nylon films. Preferably, it is applied onto the surface of a metal foil. More preferably, the metal foil is an aluminum (Al) foil.

The applied adhesive composition is then dried to form a dry layer. The applied adhesive composition is considered to be dry when the remainder of water is less than 10% of the applied adhesive composition.

The surface of a polyethylene film is covered on the dry layer of applied adhesive composition so that a polyethylene film- adhesive-metal foil composite (composite films, and also known as the laminate) is formed. The metal foil can be replaced by the polyester film or the nylon film in different applications. The laminate is preferably subjected to mechanical force to press the films even more closely. Such mechanical force is preferably applied by passing the laminate between rollers. Preferably, the rollers are heated.

The laminate may be part of a thicker laminate comprising additional films and additional adhesive compositions. The additional films can be the same or different from the films comprised in the laminate of the present invention, and can be any polymer films, paper, metal foils as commonly used in the laminate industry. The additional adhesive compositions can be the same or different from the adhesive composition of the present invention, and can be any commonly used adhesive compositions in the laminate industry.

### EXAMPLES

### I. Raw materials

### The monomeric aromatic diisocvanate:

ISONATE^{™} 125M isocyanate (125M) is a pure 4,4'-MDI commercially available from The Dow Chemical Company.

### The polyether polyol:

VORANOL^{™} V1010 polyol (V1010) is a polyether polyol, and is commercially available from The Dow Chemical Company.

VORANOL^{™} CP450 polyol (CP450) is a polyether polyol, and is commercially available from The Dow Chemical Company.

VORANOL^{™} 9287A (9287A) is a polyether polyol, and is commercially available from The Dow Chemical Company.

CARBOWAX^{™} Polyethylene Glycol 1000 (PEG 1000) is a polyether polyol, and is commercially available from The Dow Chemical Company.

TERATHANE^{™} Polytetramethyleneetherglycol 2000 (PTMEG 2000) is a polyether polyol, and is commercially available from Invista Company.

### The polyester polyol:

HSM-822-3 polyol (HSM) is a polyester polyol, and is commercially available from Xuchuan Chemical (Suzhou) Co. Ltd.

XCP-940AD polyol (XCP) is a polyester polyol, and is commercially available from Xuchuan Chemical (Suzhou) Co. Ltd.

### The epoxy resin:

D.E.R.^{™}736 is a polyglycol di-epoxide liquid resin, and is commercially available from The Dow Chemical Company.

### The aliphatic amine crosslinker:

D.E.H.^{™} 26 is an aliphatic amine crosslinker commercially available from The Dow Chemical Company.

### The isocyanate crosslinker

CR3A is an aliphatic polyisocyanate commercially available from The Dow Chemical Company.

### The aliphatic isocyanate based polyurethane dispersion:

PRIMAL^{™} Binder U-51 is an aliphatic isocyanate based polyurethane dispersion, and is commercially available from The Dow Chemical Company.

### Others:

RHODACAL^{™} DS-4 surfactant (DS-4) is an anionic surfactant with 23% solid content, and is commercially available from Rhodia Company.

1,2-propane diamine (PDA) is a chemical-grade pure chain extender, and is commercially available from Sigma-Aldrich Company.

### II. Test methods

### 1. Bond Strength (BS)

Laminates prepared from adhesive compositions were cut into 15mm width strips for T-peel test under 250mm/min crosshead speed using a 5940 Series Single Column Table Top System available from Instron Corporation. During the test, the tail of each strip was pulled slightly by fingers to make sure the tail remained 90 degree to the peeling direction. Three strips for each sample were tested and the average value was calculated. Results were in the unit of N/15mm. The higher the value is, the better the bond strength is.

### 2. Heat Seal Strength (HS)

Laminates prepared from adhesive compositions were heat-sealed in a HSG-C Heat-Sealing Machine available from Brugger Company under 140°C seal temperature and 300N pressure for 1 second, then cooled down and cut into 15mm width strips for heat seal strength test under 250mm/min crosshead speed using a 5940 Series Single Column Table Top System available from Instron Corporation. Three strips for each sample were tested and the average value was calculated. Results were in the unit of N/15mm. The higher the value is, the better the heat seal strength is.

### 3. Boil in Bag Resistance (BBR)

Laminates prepared from adhesive compositions were cut into 8cm×12cm pieces and made into a bag through hest sealing with water inside. Then place the bags in the boiling water and leave there for 30 minutes, make sure all bags were always immersed in water during the whole boiling process. When completed, record the extent of tunneling, delamination, or leakage. A sample that passed test will show no evidence of tunneling, delamination, or leakage. Then open the bags, empty and let it cool down, then cut into 15 mm width strip to test the T-peel bonding strength in Instron 5943 machine. Three strips were tested to take the average value.

### III. Examples

### 1. Preparation of the Comparative Polyurethane Dispersions 1 to 3 (Comp. PUs 1 to 3) and the Inventive Polyurethane Dispersions 4 to 6 (PUs 4 to 6)

Different amounts of isocyanates were added to the mixtures of polyols according to Table 1, and reacted at 65-90°C for 4-5hs until the mixtures reached the theoretical isocyanate group (NCO) content and the polyurethane prepolymers were made. The prepared polyurethane prepolymer was transferred into a plastic jar, and RHODACAL^{™} DS-4 surfactant was added into the plastic jar with stirring at 2000-3000rpm for 1-3 minutes. With stirring, 5°C DI water was added into the same jar to make a homogeneous dispersion. 1,2-propane diamine (PDA) (20% water solution) was then added into the dispersion slowly with stirring at 1000-1500rpm for 15-30 minutes to make the polyurethane dispersion. Additional epoxy resins were added into the polyurethane dispersions under stirring for 10-15 minutes for Inventive Polyurethane Dispersions. The detailed components of each Polyurethane Dispersion were listed in Table 1.

PRIMAL^{™} Binder U-51 is an aliphatic isocyanate based polyurethane dispersion and is mixed with or without 5% D.E.R.^{™}736 epoxy resin to make Comparative Polyurethane Dispersions 8 and 7 (Comp. PUs 7 to 8), respectively.

**TABLE 1**

| Dry weight 100% | Isocyanate | Polyol | Epoxy Resin |
|---|---|---|---|
| Comp. PU 1 | 18.0% 125M | 41.3 % 9287A; 36.1% PTMEG 2000; 4.6% PEG 1000 | - |
| Comp. PU 2 | 32.9% 125M | 5.7% PEG 1000; 31.6% V1010; 27.7% HSM; | - |
| Comp. PU 3 | 33.1% 125M | 27.9% V1010; 3.5% CP450; 5.9% PEG1000; 29.6% XCP; | - |
| PU 4 | 18.0% 125M | 41.3 % 9287A; 36.1 % PTMEG 2000; 4.6% PEG 1000; | 5% D.E.R. 736 |
| PU 5 | 32.9% 125M | 5.7% PEG1000; 31.6% V1010; 27.7% HSM; | 5% D.E.R. 736 |
| PU 6 | 33.1% 125M | 27.9% V1010; 3.5% CP450; 5.9% PEG 1000; 29.6% XCP; | 5% D.E.R. 736 |
| Comp. PU 7 | 100% PRIMAL Binder U-51 | | - |
| Comp. PU 8 | 95% PRIMAL Binder U-51 | | 5% D.E.R. 736 |

### 2. Preparation of the Adhesive Compositions and the Laminates

The Polyurethane Dispersions were either mixed with 0.7% by dry weight based on total dry weight of the polyurethane dispersion, D.E.H. 26 epoxy curing agent (for Inventive Polyurethane Dispersions (PUs 4-6) and Comparative Polyurethane Dispersion 8 (Comp. PU 8)) or 2% by dry weight based on total dry weight of the polyurethane dispersion, CR3A crosslinker (for Comparative Polyurethane Dispersions (Comp. PUs 1-3, and 7)) to form the Comparative Adhesive Compositions 1 to 3, and 7 to 8 (Comp. ACs 1 to 3, and 7 to 8) and Inventive Adhesive Compositions 4 to 6 (ACs 4 to 6). The adhesive compositions were then applied onto a polyethylene terephthalate (PET) backed Al foil, and dried in an oven at 80°C for 40s. The adhesive compositions applied onto the Al foil were then taken out from the oven and were covered (or laminated) by a 40um-thick PE film using a HL-101 Laminating Machine available from Cheminstruments, Inc. The Al foil-adhesive composition-PE film laminate was cured for 48hrs at 50°C and tested.

### IV. Results

**TABLE 2**

| Adhesive Compositions | Polyurethane Dispersions | BS (N/15mm) | HS (N/15mm) | BBR |
|---|---|---|---|---|
| Comp. AC 7 | Comp. PU 7 | 1.8 | 35 | 2.2 |
| Comp. AC 1 | Comp. PU 1 | 1.1 | 13 | 1.5 |
| Comp. AC 2 | Comp. PU 2 | 2.9 | 27 | 1.4 |
| Comp. AC 3 | Comp. PU 3 | 3.1 | 29 | 1.2 |
| Comp. AC 8 | Comp. PU 8 | 1.9 | 18 | 1.4 |
| AC 4 | PU 4 | 1.5 | 15 | 3.0 |
| AC 5 | PU.5 | 4 | 45 | 3.4 |
| AC 6 | PU.6 | 5 | 40 | 4.5 |

Inventive Adhesive Composition 4 had the same polyurethane composition as that of Comparative Adhesive Composition 1, Inventive Adhesive Composition 5 had the same polyurethane composition as that of Comparative Adhesive Composition 2, and Inventive Adhesive Composition 6 had the same polyurethane composition as that of Comparative Adhesive Composition 3. All Inventive Adhesive Compositions comprised suggested epoxy resin and suggested aliphatic amine crosslinker, while all Comparative Adhesive Compositions did not. Each pair of them was compared for the effects of the epoxy resin and the aliphatic amine crosslinker to the adhesive compositions thereafter. As shown in Table 2, Inventive Adhesive Composition 4 compared to Comparative Adhesive Composition 1, Inventive Adhesive Composition 5 compared to Comparative Adhesive Composition 2, and Inventive Adhesive Composition 6 compared to Comparative Adhesive Composition 3, all had significantly improved bond strength, heat seal strength, and boil in bag resistance. The results suggested that the epoxy resin and the aliphatic amine crosslinker played very important roles in the present invention.

The improved adhesive performance was not just because of the selections to the epoxy resin and the crosslinker, but was also because of the selections to the polyurethane compositions.

Comparative Adhesive Composition 8 comprised PRIMAL^{™} Binder U-51, which was a commercially available polyurethane dispersion comprising an aliphatic isocyanate, the suggested epoxy resin and the suggested crosslinker, while Comparative Adhesive Composition 7 comprised only the PRIMAL^{™} Binder U-51, and an unsuggested crosslinker. As shown in Table 2, Comparative Adhesive Composition 8 did not show improved bond strength, heat seal strength, and boil in bag resistance compared to Comparative Adhesive Composition 7. The results suggested the importance of the selections to the polyurethane composition.

## Claims

1. An adhesive composition comprising, by dry weight based on total dry weight of the adhesive composition, from 70% to 96%, a polyurethane dispersion, from 1% to 20%, an epoxy resin, and from 0.5% to 15%, an aliphatic amine crosslinker; wherein the polyurethane dispersion comprises a polyurethane prepolymer, and by dry weight based on total dry weight of the polyurethane dispersion, from 0.5% to 10%, an ionic surfactant, and from 0.1% to 8%, a polyamine.

2. The adhesive composition according to Claim 1 wherein the polyurethane prepolymer comprises, as polymerized units, by dry weight based on total dry weight of the polyurethane prepolymer, from 10% to 40%, a monomeric aromatic diisocyanate, and from 20% to 85%, a polyether polyol.

3. The adhesive composition according to Claim 2 wherein the polyurethane prepolymer further comprises, as polymerized units, from 0.1% to 30% by dry weight based on total dry weight of the polyurethane prepolymer, a polyester polyol.

4. The adhesive composition according to Claim 2 wherein the monomeric aromatic diisocyanate has a molecular weight Mw of less than 500g/mol.

5. The adhesive composition according to Claim 2 wherein the monomeric aromatic diisocyanate is selected from methylene diphenyl diisocyanate, toluene diisocyanate, and the combination thereof.

6. The adhesive composition according to Claim 2 wherein the polyether polyol has a molecular weight Mw of from 400 to 4000g/mol, and a functionality of from 1.8 to 4.

7. The adhesive composition according to Claim 3 wherein the polyester polyol has a molecular weight Mw of from 400 to 4000g/mol, and a functionality of from 1.8 to 4.

8. The adhesive composition according to Claim 1 wherein the ionic surfactant is selected from sulfonates, phosphate, carboxylate, and the combination thereof.

9. The adhesive composition according to Claim 1 wherein the polyurethane dispersion has a solid content of from 25% to 60%.

10. The adhesive composition according to Claim 1 wherein the epoxy resin is a compound having at least 2 epoxide groups.

11. The adhesive composition according to Claim 1 wherein the epoxy resin is obtainable by reacting epichlorohydrin with aliphatic diols or polyols.

12. The adhesive composition according to Claim 11 wherein the polyol is polypropylene glycol.

13. The adhesive composition according to Claim 1 wherein the aliphatic amine crosslinker is selected from diethylene triamine, triethylene pentamine, triethylene tetramine, polyetheramine, and any combinations thereof.

14. A laminate comprising the adhesive composition according to Claim 1.

## Patentansprüche

1. Eine Klebstoffzusammensetzung, beinhaltend, nach Trockengewicht bezogen auf das Gesamttrockengewicht der Klebstoffzusammensetzung, zu 70 % bis 96 % eine Polyurethandispersion, zu 1 % bis 20 % ein Epoxidharz und zu 0,5 % bis 15 % einen aliphatischen Aminvernetzer; wobei die Polyurethandispersion ein Polyurethanpräpolymer und, nach Trockengewicht bezogen auf das Gesamttrockengewicht der Polyurethandispersion, zu 0,5 % bis 10 % ein ionisches Tensid und zu 0,1 % bis 8 % ein Polyamin beinhaltet.

2. Klebstoffzusammensetzung gemäß Anspruch 1, wobei das Polyurethanpräpolymer als polymerisierte Einheiten, nach Trockengewicht bezogen auf das Gesamttrockengewicht des Polyurethanpräpolymers, zu 10 % bis 40 % ein monomeres aromatisches Diisocyanat und zu 20 % bis 85 % ein Polyetherpolyol beinhaltet.

3. Klebstoffzusammensetzung gemäß Anspruch 2, wobei das Polyurethanpräpolymer ferner als polymerisierte Einheiten zu 0,1 % bis 30 %, nach Trockengewicht bezogen auf das Gesamttrockengewicht des Polyurethanpräpolymers, ein Polyesterpolyol beinhaltet.

4. Klebstoffzusammensetzung gemäß Anspruch 2, wobei das monomere aromatische Diisocyanat ein Molekulargewicht Mw von weniger als 500 g/mol aufweist.

5. Klebstoffzusammensetzung gemäß Anspruch 2, wobei das monomere aromatische Diisocyanat aus Methylendiphenyldiisocyanat, Toluoldiisocyanat und der Kombination davon ausgewählt ist.

6. Klebstoffzusammensetzung gemäß Anspruch 2, wobei das Polyetherpolyol ein Molekulargewicht Mw von 400 bis 4000 g/mol und eine Funktionalität von 1,8 bis 4 aufweist.

7. Klebstoffzusammensetzung gemäß Anspruch 3, wobei das Polyesterpolyol ein Molekulargewicht Mw von 400 bis 4000 g/mol und eine Funktionalität von 1,8 bis 4 aufweist.

8. Klebstoffzusammensetzung gemäß Anspruch 1, wobei das ionische Tensid aus Sulfonaten, Phosphat, Carboxylat und der Kombination davon ausgewählt ist.

9. Klebstoffzusammensetzung gemäß Anspruch 1, wobei die Polyurethandispersion einen Feststoffgehalt von 25 % bis 60 % aufweist.

10. Klebstoffzusammensetzung gemäß Anspruch 1, wobei das Epoxidharz eine Verbindung mit mindestens 2 Epoxidgruppen ist.

11. Klebstoffzusammensetzung gemäß Anspruch 1, wobei das Epoxidharz durch das Zur-Reaktion-Bringen von Epichlorhydrin mit aliphatischen Diolen oder Polyolen erhältlich ist.

12. Klebstoffzusammensetzung gemäß Anspruch 11, wobei das Polyol Polypropylenglykol ist.

13. Klebstoffzusammensetzung gemäß Anspruch 1, wobei der aliphatische Aminvernetzer aus Diethylentriamin, Triethylenpentamin, Triethylentetramin, Polyetheramin und beliebigen Kombinationen davon ausgewählt ist.

14. Ein Laminat, beinhaltend die Klebstoffzusammensetzung gemäß Anspruch 1.

## Revendications

1. Une composition adhésive comprenant, en poids à sec rapporté au poids à sec total de la composition adhésive, de 70 % à 96 % d'une dispersion de polyuréthane, de 1 % à 20 % d'une résine époxy, et de 0,5 % à 15 % d'un agent de réticulation amine aliphatique ; dans laquelle la dispersion de polyuréthane comprend un prépolymère de polyuréthane, et en poids à sec rapporté au poids à sec total de la dispersion de polyuréthane, de 0,5 % à 10 % d'un tensioactif ionique, et de 0,1 % à 8 % d'une polyamine.

2. La composition adhésive selon la revendication 1 dans laquelle le prépolymère de polyuréthane comprend, en tant qu'unités polymérisées, en poids à sec rapporté au poids à sec total du prépolymère de polyuréthane, de 10 % à 40 % d'un diisocyanate aromatique monomère, et de 20 % à 85 % d'un polyol de polyéther.

3. La composition adhésive selon la revendication 2 dans laquelle le prépolymère de polyuréthane comprend en outre, en tant qu'unités polymérisées, de 0,1 % à 30 % en poids à sec rapporté au poids à sec total du prépolymère de polyuréthane, d'un polyol de polyester.

4. La composition adhésive selon la revendication 2 dans laquelle le diisocyanate aromatique monomère a une masse moléculaire Mw inférieure à 500 g/mol.

5. La composition adhésive selon la revendication 2 dans laquelle le diisocyanate aromatique monomère est sélectionné parmi le diisocyanate de méthylène diphényle, le diisocyanate de toluène, et la combinaison de ceux-ci.

6. La composition adhésive selon la revendication 2 dans laquelle le polyol de polyéther a une masse moléculaire Mw allant de 400 à 4 000 g/mol, et une fonctionnalité allant de 1,8 à 4.

7. La composition adhésive selon la revendication 3 dans laquelle le polyol de polyester a une masse moléculaire Mw allant de 400 à 4 000 g/mol, et une fonctionnalité allant de 1,8 à 4.

8. La composition adhésive selon la revendication 1 dans laquelle le tensioactif ionique est sélectionné parmi les sulfonates, le phosphate, le carboxylate, et la combinaison de ceux-ci.

9. La composition adhésive selon la revendication 1 dans laquelle la dispersion de polyuréthane a une teneur en matière solide allant de 25 % à 60 %.

10. La composition adhésive selon la revendication 1 dans laquelle la résine époxy est un composé ayant au moins 2 groupes époxyde.

11. La composition adhésive selon la revendication 1 dans laquelle la résine époxy peut être obtenue en faisant réagir de l'épichlorhydrine avec des diols ou polyols aliphatiques.

12. La composition adhésive selon la revendication 11 dans laquelle le polyol est le polypropylène glycol.

13. La composition adhésive selon la revendication 1 dans laquelle l'agent de réticulation amine aliphatique est sélectionné parmi la diéthylène triamine, la triéthylène pentamine, la triéthylène tétramine, la polyétheramine, et n'importe quelles combinaisons de ceux-ci.

14. Un stratifié comprenant la composition adhésive selon la revendication 1.
